# FASCICULE DE BREVET EUROPEEN

(11) **EP 3 007 921 B1**
(45) Date de publication et mention de la délivrance du brevet: **20.02.2019**
(21) Numéro de dépôt: 14737168.6
(22) Date de dépôt: 14.06.2014
(51) Int. Cl.: B60J 10/00, B64C 1/14, B64D 15/00, B64D 15/12, F16J 15/06

(54) **PROCÉDÉ ET SYSTÈME D'ANTIGIVRAGE / DÉGIVRAGE DE PORTE D'AÉRONEF ET PORTE D'AÉRONEF ÉQUIPÉE D'UN TEL SYSTÈME**
ANTI-VEREISUNGSSYSTEM FÜR EINE FLUGZEUGTÜR UND MIT SOLCH EINEM SYSTEM AUSGESTATTETE FLUGZEUGTÜR
ANTI-ICING / DE-ICING SYSTEM FOR AIRCRAFT DOOR AND AIRCRAFT DOOR EQUIPPED WITH SUCH A SYSTEM

(30) Priorité: 14.06.2013 FR 1355589
(43) Date de publication de la demande: 20.04.2016
(73) Titulaire: Latecoere, 31500 Toulouse (FR); JPR, 75008 Paris (FR)
(72) Inventeur: PERRIER, Christophe, F-31200 Toulouse (FR); BESETTES, Cyrille, F-31660 Buzet sur Tarn (FR); AMALRIC, Bernard, F-31240 L'union (FR); FLORETZ, Bertrand, F-92300 Levallois Perret (FR); TORRIS, Antoine, F-80800 Villiers Bretonneux (FR); CÖME, Olivier, F-45800 Saint Jean de Brave (FR)
(74) Mandataire: Junca, Eric
(86) Numéro de dépôt international: PCT/EP2014/062486
(87) Numéro de publication internationale: WO 2014/198956

(56) Documents cités:
- EP-A1- 0 516 526
- EP-A1- 1 541 467
- DE-C1- 19 942 038
- US-B2- 7 775 481
- US-B2- 7 900 870

## Description

### DOMAINE TECHNIQUE

L'invention concerne un procédé et un ensemble antigivrage/dégivrage de porte d'aéronef, ainsi qu'une porte d'aéronef équipée de ce système. L'invention permet, de manière générale, de protéger la porte contre le givre ou la glace, que ce soit pour empêcher leur formation que pour les faire disparaître.

La prévention de la formation de glace ou de givre d'une porte d'aéronef permet d'ouvrir la porte de manière standard non seulement dans le cas d'atterrissages dans des localisations ou pendant certaines périodes de l'année où la température est basse, par exemple -10 à - 20°C, mais également dans le cas d'atterrissage en urgence, l'avion restant recouvert de givre. Le cas d'application le plus fréquent reste le rejet du décollage (ou RTO, initiales de « rejected take-off » en terminologie anglaise), par exemple si une pluie verglaçante se dépose sur le fuselage alors que l'avion est en bout de piste (à l'arrêt et prêt à décoller).

L'invention s'applique à prévenir la formation de la glace ou à faciliter la rupture de la glace dans le cas où ladite formation n'a pu être empêchée. Dans tout le présent texte, l'utilisation du terme « glace » vaut également pour le givre, qui naît de la transformation de l'eau liquide en une fine couche de glace.

Les ouvertures de porte d'aéronef qui ne sont pas assistées deviennent pénibles lorsqu'une couche de glace recouvre la porte, ou la poignée extérieure au moins en partie (lorsqu'elle n'est pas débrayable par rapport à la poignée interne), ou encore les panneaux de ventilation (« Vent Panel » en terminologie anglaise) qui servent en matière de sécurité à empêcher la pressurisation de l'appareil si la porte n'est complètement verrouillée.

Le mécanisme d'ouverture de porte se compose d'un bras de levier capable de lever la porte avant de la faire pivoter et de rompre la glace par cisaillement avec une faible composante de flexion lors de cette levée. Le mécanisme de levage est dimensionné pour satisfaire la certification avion qui impose une rupture aisée d'une couche de glace pouvant atteindre 2 ou 3 mm, voire plus. Ce dimensionnement des mécanismes d'ouverture nécessite également des renforts pour que ces mécanismes soient suffisamment robustes afin d'engendrer des efforts importants sur les bords de porte.

### ÉTAT DE LA TECHNIQUE

Ce dimensionnement et ces renforts alourdissent la porte et génèrent des coûts de développement élevés.

Des solutions alternatives ont été développées. Il est par exemple prévu dans le document de brevet US 7900870 l'utilisation de deux leviers d'ouverture de porte d'avion, le second levier permettant de vaincre l'effet de collage de la porte provoqué par la présence de glace ou autre obstruction. Ce système à deux leviers reste complexe et coûteux.

Dans le document de brevet US 7775481, il est apparu essentiel d'empêcher le givrage des éléments de verrouillage des portes et des toboggans d'évacuation. Lors d'un armement des toboggans, les éléments de verrouillage sont arrimés dans des semelles intégrées dans le plancher de la cabine d'avion. Ces éléments de verrouillage sont alors chauffés par une feuille chauffante intégrée dans une plaque de céramique agencée de manière hermétique au fond de chaque semelle. La feuille chauffante est constituée d'une bande en alliage s'étendant en zigzag dans une couche de céramique pour former un circuit dont les extrémités sont reliées à des conducteurs électriques.

La solution proposée dans le brevet US 7775481 ne permet pas de garantir un antigivrage ni un dégivrage efficace de la porte elle-même. En effet, les moyens de chauffage prévus ne peuvent empêcher la formation de glace sur la porte et le fuselage de l'avion. Et le dégivrage des éléments d'armement de toboggan intégrés dans le plancher de l'avion reste inefficace pour faciliter l'ouverture de la porte recouverte de glace le long de ses bords.

### EXPOSÉ DE L'INVENTION

L'invention vise précisément à faciliter l'ouverture des portes d'aéronef en empêchant la formation de glace ou, à tout le moins, en favorisant la rupture rapide de la glace sur les bords de porte en liaison avec la peau du fuselage. Pour ce faire, il est prévu d'apporter de l'énergie le long de la porte lorsque des conditions particulières sont réunies.

A cet effet, la présente invention a pour objet un procédé d'antigivrage/dégivrage d'un équipement d'aéronef présentant une ouverture vers l'extérieur de l'aéronef encadrée par le fuselage via un joint d'étanchéité en position fermée, en particulier une porte d'aéronef, une poignée extérieure de porte ou un panneau de ventilation. Ce procédé consiste à dissiper une énergie d'excitation le long d'au moins une étendue qui suit au moins en partie le joint d'étanchéité de l'ouverture de l'équipement hors de ce joint d'étanchéité, la dissipation étant déclenchée lorsque les moteurs de l'aéronef sont en marche et la température extérieure est inférieure ou sensiblement égale à 10°C. L'étendue de dissipation d'énergie peut se situer dans le joint, dans le support du joint, qui peut former avec le joint une même pièce, ou à proximité du joint, sur l'équipement ou sur le fuselage d'encadrement de l'équipement.

Selon des modes de mise en oeuvre préférés :
- l'énergie d'excitation est dissipée sur un bord de porte, en particulier le long d'au moins une face latérale de la porte, et/ou le long d'une face latérale du fuselage parallèlement audit bord de porte ;
- l'énergie d'excitation est choisie parmi l'énergie thermique, vibratoire, électro-expulsive et pneumatique ;
- l'énergie thermique est mise en oeuvre par un courant électrique ;
- l'énergie pneumatique est mise en oeuvre par un courant d'air chaud sous pression.

L'invention se rapporte également à ensemble comportant un système d'antigivrage/dégivrage d'équipement, en particulier une porte, une poignée extérieure de porte ou un panneau de ventilation d'un aéronef comportant notamment des moteurs et une centrale de pilotage, ce système étant destiné à mettre en oeuvre le procédé ci-dessus. Un tel système comporte un joint d'étanchéité dudit équipement, une source d'énergie d'excitation, un calculateur de gestion apte à recevoir des informations de température et des informations de fonctionnement des moteurs de la centrale de pilotage, et des moyens de dissipation d'une telle énergie qui s'étendent parallèlement à au moins une partie du joint d'étanchéité dudit équipement hors de ce joint d'étanchéité.

L'ensemble comportant un fuselage d'aéronef et l'équipement étant une porte d'aéronef, les moyens de dissipation sont aptes à s'étendre parallèlement à au moins une face latérale de la porte d'aéronef, le long d'une paroi de support de joint d'étanchéité solidarisé à la porte en regard d'une face latérale de fuselage d'encadrement de la porte et/ou le long de cette face latérale de fuselage, le joint d'étanchéité de la porte étant apte à être comprimé contre un appui venant d'une face latérale du fuselage lorsque la porte est fermée.

Ce système permet de diminuer les efforts et le temps d'ouverture de porte en situation d'urgence ou standard, en limitant ou supprimant la glace présente - ou au moins en facilitant sa rupture - dans la zone de feuillure entre les faces latérales. Le gain d'effort permet de diminuer le dimensionnement des mécanismes d'ouverture de portes, de les alléger et donc d'en réduire le coût.

Selon des modes de réalisation particuliers :
- les moyens de dissipation de l'énergie d'excitation sont constitués par au moins un conducteur électrique isolé qui s'étend le long de la paroi de support du joint d'étanchéité et la source d'énergie d'excitation est une source de tension électrique qui transmet un courant d'intensité adaptée apte à chauffer le conducteur à une température ne dépassant pas une valeur plafond déterminée, afin d'éviter tout risque de brûlure par contact avec les parois environnantes;
- le support du joint d'étanchéité est en matériau choisi parmi matériau à fibres de carbone époxy, à fibres composites, à base de silicone et d'élastomères, et le conducteur est formé d'un filament en alliage métallique logé au coeur d'une gaine en matériau électriquement isolant, le conducteur étant solidarisé au moins partiellement sur ou dans ledit support;
- les moyens de dissipation de l'énergie d'excitation sont constitués par des émetteurs d'ultra-sons et la source d'énergie est une source ultrasonore ;
- les moyens de dissipation de l'énergie d'excitation sont constitués par des boucles de dissipation d'une énergie électro-répulsive produite par une source d'impulsions électriques ;
- les moyens de dissipation de l'énergie d'excitation sont constitués par un jet d'air chaud sous pression fourni par un compresseur d'air préchauffé comme source d'énergie ;
- afin de faciliter encore davantage la rupture ou le décollement de la glace formée sur la jonction porte/fuselage, des couches anti-adhérentes sont également déposée sur la peau de la porte et du fuselage à proximité de l'encadrement de jonction entre la porte et le fuselage, en particulier un nano-revêtement chimiquement lié auxdites peaux et/ou une bande de peinture conductrice de l'électricité reliée à une source de tension.

L'invention se rapporte également à une porte d'aéronef équipée du système antigivrage/dégivrage défini ci-dessus, ainsi qu'à un aéronef équipé d'un système d'antigivrage/dégivrage du type défini ci-dessus, « du type » signifiant ici que le système n'est plus dédié exclusivement à la porte mais, *mutatis mutandis,* à un autre équipement pourvu d'au moins un joint. Le système est alors agencé à proximité d'au moins un joint d'un équipement de l'aéronef choisi parmi les portes, les poignées extérieures de porte et les panneaux de ventilation.

### PRÉSENTATION DES FIGURES

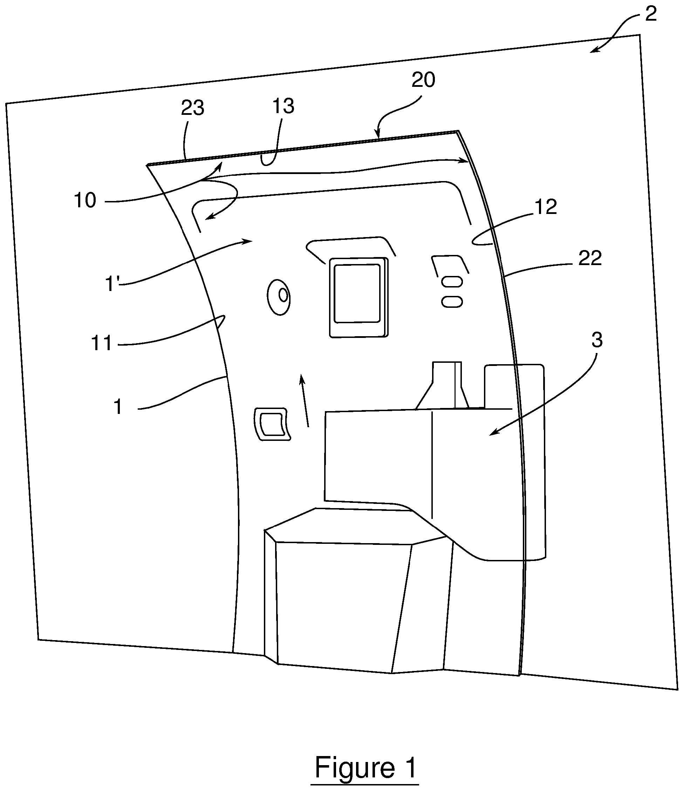

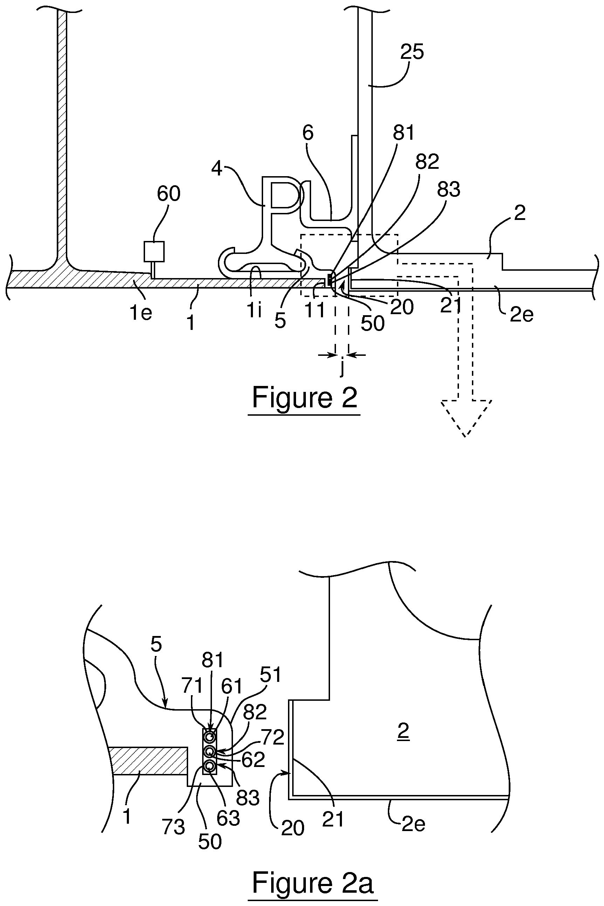

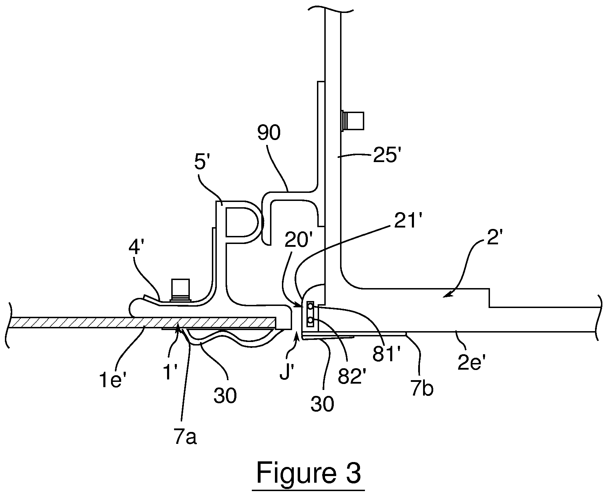

D'autres aspects et particularités de la mise en oeuvre de l'invention apparaîtront à la lecture de la description détaillée qui suit, accompagnée de dessins annexés qui représentent, respectivement :
- en figure 1, une vue globale de la face intérieure d'une porte d'avion encadrée par le fuselage en position fermée ;
- en figures 2 et 2a, une vue en coupe de la jonction porte/fuselage et un agrandissement dans un exemple de réalisation selon l'invention, et
- en figure 3, une vue en coupe longitudinale de cette jonction dans une variante de réalisation.

### DESCRIPTION DÉTAILLÉE

Dans le présent texte, le qualificatif de type « latéral » signifie en extension perpendiculairement au plan médian de l'aéronef, et les qualificatifs de type « supérieur », « vertical » ou « horizontal » se réfèrent au positionnement d'éléments en mode standard d'utilisation.

L'avion est équipé d'une centrale de pilotage de moteurs et d'accessoires en liaison avec un calculateur de gestion qui reçoit des informations de température et de fonctionnement des moteurs de la centrale de pilotage. L'avion est bâti autour d'un fuselage dans lequel des portes d'accès et d'évacuation sont aménagées.

En référence à la vue globale de la figure 1, la face intérieure 1i d'une porte d'avion 1 est illustrée en position fermée et encadrée par le fuselage 2. La porte 1 possède un bras d'articulation 3 apte à pivoter la porte 1, lors de son ouverture, parallèlement à elle-même le long de la peau externe du fuselage 2, afin d'ouvrir un espace d'évacuation des passagers limité par l'encadrement réalisé par une découpe 20 du fuselage 2.

Cet encadrement se compose de trois faces sensiblement linéaires, deux faces latérales 21 et 22 sensiblement verticales reliés par une face supérieure 23 sensiblement horizontale. La découpe d'encadrement 20 est réalisée en regard d'un bord 10 de la porte 1 possédant également deux faces sensiblement verticales 11 et 12 reliées par une face sensiblement horizontale 13.

Selon l'invention, la porte 1 est équipée d'un système d'antigivrage/dégivrage comportant une source d'énergie d'excitation gérée par le calculateur et des moyens de dissipation d'une telle énergie s'étendant parallèlement au bord 10 de la porte d'aéronef 1.

Une vue en coupe de la jonction « J » entre la face 11 de la porte 1 et la face d'encadrement 21 du fuselage 2 est illustrée en référence à la figure 2, selon un exemple de réalisation de l'invention. Sur cette vue, un joint d'étanchéité 4, maintenu dans un support 5 solidarisé à la porte 1, est mis en pression contre un appui 6 formé sur une face latérale 25 du fuselage 2 lorsque la porte 1 est fermée. Dans l'exemple, le support 5 et le joint d'étanchéité 4 sont issus d'un même moulage et forment une seule pièce. Le support 5 s'étend le long de la face interne 1i de la porte 1, ainsi que sur la face latérale 11 de la porte 1 par un rebord 50 dit de protection.

Ce rebord 50 protège en effet la porte contre l'érosion, en particulier lorsqu'elle est constituée en matériau composite à base de fibres de carbone, l'érosion venant des flux aérodynamiques en vol. Il protège également la porte contre les chocs, par exemple des chocs répétés des bagages des passagers.

Dans cet exemple, le support 5 est en fibres composites et la source d'énergie d'excitation est une source de tension électrique telle que la source 60 qui transmet un courant d'intensité entre les extrémités de trois filaments de conducteurs électriques 61, 62, 63. L'intensité du courant électrique est calibrée pour que la température des parois environnantes ne dépasse pas un certain plafond, par exemple 60°C, afin d'éviter tout risque de brûlure d'un passager ou d'un opérateur par contact avec l'une de ces parois.

Les filaments 61 à 63 sont en alliage métallique et sont logés dans des gaines 71 à 73 en matériau plastique pour former des conducteurs isolés 81 à 83 (voir l'agrandissement de la figure 2a). Ces conducteurs sont intégrées dans le rebord 50 du support 5 et s'étendent parallèlement à la face latérale 51 du support 5 qui vient contre la face 11 de la porte 1. La paroi latérale 51 fait face à la paroi latérale 21 d'encadrement du fuselage 2. Dans ces conditions, la glace formée entre les peaux extérieures 2e et 1e respectivement du fuselage 2 et de la porte 1 - au regard de la zone de feuillure entre les faces latérales 11 et 21 de la jonction « J » - disparaît ou du moins se réduit par dissipation de la chaleur dégagée par les filaments chauffés 61 à 63.

La vue en coupe de la jonction « J' » entre la porte 1' et le fuselage 2' de la figure 3 illustre une variante de réalisation. Dans cette variante, deux conducteurs de dissipation thermique 81' et 82', semblables aux conducteurs 81 et 82, sont intégrés dans l'encadrement 20' du fuselage 2' parallèlement à la face latérale 21' de ce fuselage 2'. Le support 5' du joint 4' présente une épaisseur suffisante pour y loger les conducteurs 81' et 82'. Le joint 4' est déformé en pression sous l'action d'un couteau 90 venant d'une face latérale 25' du fuselage 2' afin d'assurer l'étanchéité de la liaison porte/fuselage.

Dans cette variante, également, deux pièces de nano-revêtement 7a et 7b formant des couches anti-adhérentes sont chimiquement liées aux peaux extérieures 1e' et 2e', respectivement de la porte 1' et du fuselage 2'. Les pièces 7a et 7b sont agencées à proximité de la jonction J'. La présence de ces revêtements permet de faciliter davantage la rupture ou le décollement de la glace 30 formée sur les peaux extérieures 1e' et 2e'. Alternativement, une bande de peinture conductrice de l'électricité peut être déposée aux peaux extérieures 1e' et 2e', à proximité de la jonction J'. Les extrémités d'une telle bande son reliés aux bornes d'une source de tension telle que la source 60 (figure 2).

En fonctionnement, le calculateur déclenche le système par mise sous tension des filaments lorsque les données de température atteignent une valeur planchée, -10°C dans les exemples illustrés.

L'invention n'est pas limitée aux exemples de réalisation décrits et représentés. En particulier, l'énergie thermique peut être dissipée par une réaction exothermique entre composants chimiques ou par la combustion d'un combustible lent. Par ailleurs, une solution dégivrante - en général à base d'alcool - est également vaporisée le long d'un au moins un bord de porte.

En outre, l'invention peut également s'appliquer au joint de la poignée extérieure ou encore aux joints des panneaux de ventilation.

## Revendications

1. Procédé d'antigivrage/dégivrage d'un équipement d'aéronef (1, 1') présentant une ouverture (J, J') vers l'extérieur de l'aéronef encadrée par le fuselage (2, 2') via un joint d'étanchéité (4, 4') en position fermée, **caractérisé en ce qu'**il consiste à dissiper une énergie d'excitation le long d'au moins une étendue (5, 21') qui suit au moins en partie le joint d'étanchéité (4, 4') de l'ouverture (J, J') de l'équipement (1, 1') hors de ce joint d'étanchéité (4, 4'), la dissipation étant déclenchée lorsque les moteurs de l'aéronef sont en marche et la température extérieure est inférieure ou sensiblement égale à une température de référence.

2. Procédé d'antigivrage/dégivrage selon la revendication 1, dans lequel l'énergie d'excitation est dissipée sur un bord de porte (10), en particulier le long d'au moins une face latérale (11, 12, 13) de la porte (1, 1'), et/ou le long d'une face latérale (21, 22, 23, 25) du fuselage (2, 2') parallèlement audit bord (10) de porte (1, 1').

3. Procédé d'antigivrage/dégivrage selon la revendication précédente, dans lequel l'énergie d'excitation est choisie parmi l'énergie thermique, vibratoire, électro-expulsive et pneumatique.

4. Procédé d'antigivrage/dégivrage selon la revendication 3, dans lequel l'énergie thermique est mise en oeuvre par un courant électrique.

5. Procédé d'antigivrage/dégivrage selon la revendication 3, dans lequel l'énergie pneumatique est mise en oeuvre par un courant d'air chaud sous pression.

6. Procédé d'antigivrage/dégivrage selon l'une quelconque des revendications précédentes, dans lequel une solution dégivrante est également vaporisée le long dudit bord de porte (10).

7. Ensemble comportant un système d'antigivrage/dégivrage et un équipement (1, 1') d'un aéronef équipé notamment de moteurs et d'une centrale de pilotage, ce système étant destiné à mettre en oeuvre le procédé selon l'une quelconque des revendications précédentes, et comportant un calculateur de gestion apte à recevoir des informations de température et des informations de fonctionnement des moteurs de la centrale de pilotage, un tel système est **caractérisé en ce qu'**il comporte également un joint d'étanchéité (4, 4') dudit équipement (1, 1'), une source d'énergie d'excitation et des moyens de dissipation (81 à 83 ; 81', 82') d'une telle énergie qui s'étendent parallèlement à au moins une partie du joint d'étanchéité (4, 4') dudit équipement (1, 1') hors de ce joint d'étanchéité (4, 4').

8. Ensemble comportant un système d'antigivrage/dégivrage d'équipement d'aéronef selon la revendication précédente ainsi qu'un fuselage (2, 2') d'aéronef, dans lequel, l'équipement étant une porte de cet aéronef (1, 1'), les moyens de dissipation s'étendent parallèlement à au moins une face latérale (11, 12, 13) de la porte d'aéronef (1, 1'), le long d'un support (5, 5') de joint d'étanchéité (4, 4') solidarisé à la porte (1, 1') en regard d'une face latérale (21, 22, 23; 21') de fuselage (2, 2') d'encadrement (20, 20') de la porte (1, 1') et/ou le long d'une face latérale (21, 22, 23 ; 21') de fuselage (2, 2'), le joint d'étanchéité (4, 4') de la porte (1, 1') se comprimant contre un appui (6, 90) venant d'une face latérale (25, 25') du fuselage (2, 2') lorsque la porte (1, 1') est fermée.

9. Ensemble selon la revendication 8, dans lequel les moyens de dissipation de l'énergie d'excitation sont constitués par au moins un conducteur électrique isolé (81 à 83 ; 81', 82') qui s'étend le long du support (5, 5') du joint d'étanchéité (4, 4'), en particulier dans un rebord de protection (50) de la porte (1), et/ou le long de la face latérale de fuselage (21, 22, 23; 21') en regard, en particulier le long de la face latérale de fuselage (21') en regard du rebord de protection (50), et la source d'énergie d'excitation est une source de tension électrique qui transmet un courant d'intensité adaptée pour chauffer le conducteur à une température ne dépassant pas une valeur plafond déterminée.

10. Ensemble selon la revendication précédente, dans lequel le support (5, 5') du joint d'étanchéité (4, 4') est en matériau choisi parmi un matériau à fibres de carbone époxy, à fibres composites, à base de silicone et d'élastomères et le conducteur (81 à 83 ; 81', 82') est formé d'un filament (61 à 63) en alliage métallique logé au coeur d'une gaine en matériau électriquement isolant (71 à 73), le conducteur (81 à 83; 81', 82') étant solidarisé au moins partiellement sur ou dans ledit support (5, 5').

11. Ensemble selon l'une quelconque des revendications 7 ou 8, dans lequel les moyens de dissipation de l'énergie d'excitation sont constitués par des émetteurs d'ultra-sons et la source d'énergie est une source ultrasonore.

12. Ensemble selon l'une quelconque des revendications 7 ou 8, dans lequel les moyens de dissipation de l'énergie d'excitation sont constitués par des boucles de dissipation d'une énergie électro-répulsive produite par une source d'impulsions électriques.

13. Ensemble selon l'une quelconque des revendications 7 ou 8, dans lequel les moyens de dissipation de l'énergie d'excitation sont constitués par un jet d'air chaud sous pression fourni par un compresseur d'air préchauffé comme source d'énergie.

14. Ensemble selon l'une quelconque des revendications 8 à 10 ou bien l'une des revendications 11 à 12 lorsque les revendications 11 à 12 dépendent de la revendication 8, dans lequel des couches anti-adhérentes sont également déposées sur la peau de la porte (1e') et la peau du fuselage (2e') à proximité de l'encadrement (20, 20') de jonction (J, J') entre la porte (1, 1') et le fuselage (2, 2'), en particulier des nano-revêtements (7a, 7b) chimiquement liés auxdites peaux (1e', 2e') et/ou une bande de peinture conductrice de l'électricité reliée à une source de tension (60).

15. Ensemble selon l'une quelconque des revendications 7 à 13, dans lequel l'équipement est une porte d'aéronef qui est équipée du système d'antigivrage/givrage.

16. Aéronef équipé d'un ensemble selon l'une quelconque des revendications 7 à 13, le système d'antigivrage/ dégivrage étant agencé à proximité d'au moins le joint de l'équipement de l'aéronef, ledit équipement étant choisi parmi les portes, les poignées extérieures de porte et les panneaux de ventilation.

## Patentansprüche

1. Antivereisungs-/Enteisungsverfahren für eine Flugzeugausstattung (1, 1') mit einer vom Rumpf (2, 2') über eine Dichtung (4, 4') umrahmten Öffnung (J, J') zur Außenseite des Flugzeugs in der geschlossenen Position, **dadurch gekennzeichnet, dass** es darin besteht, eine Anregungsenergie entlang mindestens eines Bereichs (5, 21') abzugeben, die mindestens teilweise der Dichtung (4, 4') der Öffnung (J, J') der Ausstattung (1, 1') außerhalb dieser Dichtung (4, 4') folgt, wobei das Abgeben dann ausgelöst wird, wenn die Motoren des Flugzeugs laufen und die Außentemperatur niedriger als eine oder im Wesentlichen gleich einer Referenztemperatur ist.

2. Antivereisungs-/Enteisungsverfahren gemäß Anspruch 1, wobei die Anregungsenergie an einer Türkante (10), insbesondere entlang mindestens einer Seitenfläche (11, 12, 13) der Tür (1, 1') und/oder entlang einer Seitenfläche (21, 22, 23, 25) des Rumpfes (2, 2') parallel zu dieser Kante (10) der Tür (1, 1') abgegeben wird.

3. Antivereisungs-/Enteisungsverfahren gemäß dem vorhergehenden Anspruch, wobei die Anregungsenergie unter Wärme-, Schwingungs-, elektroexpulsive und pneumatische Energie ausgewählt wird.

4. Antivereisungs-/Enteisungsverfahren gemäß Anspruch 3, wobei die Wärmeenergie durch einen elektrischen Strom bereitgestellt wird.

5. Antivereisungs-/Enteisungsverfahren gemäß Anspruch 3, wobei die pneumatische Energie durch einen mit Druck beaufschlagten Heißluftstrom bereitgestellt wird.

6. Antivereisungs-/Enteisungsverfahren nach einem der vorhergehenden Ansprüche, wobei eine Enteisungslösung auch entlang der Türkante (10) zerstäubt wird.

7. Anordnung mit einem Antivereisungs-/Enteisungssystem und mit einer Ausstattung (1, 1') eines Flugzeugs, insbesondere mit Motoren und einer Steuereinheit, wobei dieses System dazu bestimmt ist, das Verfahren gemäß einem der vorhergehenden Ansprüche umzusetzen, und umfassend einen Regelungscomputer, der Temperaturinformationen und Betriebsinformationen über die Motoren von der Steuereinheit empfangen kann, wobei ein solches System **dadurch gekennzeichnet ist, dass** es ebenfalls eine Dichtung (4, 4') der Ausstattung (1, 1'), eine Anregungsenergiequelle sowie Mittel zur Abgabe (81 bis 83; 81', 82') einer solchen Energie umfasst, die außerhalb der Dichtung (4, 4') parallel zu mindestens einem Teil der Dichtung (4, 4') der Ausstattung (1, 1') verlaufen.

8. Anordnung mit einem Antivereisungs-/Enteisungssystem einer Flugzeugausstattung gemäß dem vorhergehenden Anspruch und mit einem Rumpf (2, 2') des Flugzeugs, wobei es sich bei der Ausstattung um eine Tür dieses Flugzeugs (1, 1') handelt und die Mittel zur Abgabe parallel zu mindestens einer Seitenfläche (11, 12, 13) der Tür (1, 1') entlang eines Halters (5, 5') der an der Tür (1, 1') befestigten Dichtung (4, 4') gegenüber einer Seitenfläche (21, 22, 23; 21') des Rumpfes (2, 2'), des Rahmens (20, 20') der Tür (1, 1') und/oder entlang einer Seitenfläche (21, 22, 23; 21') des Rumpfes (2, 2') verlaufen, wobei die Dichtung (4, 4') der Tür (1, 1') bei geschlossener Tür (1, 1') gegen einen Träger (6, 90) drückt, der aus einer Seitenfläche (25, 25') des Rumpfes (2, 2') kommt.

9. Anordnung gemäß Anspruch 8, wobei die Mittel zur Abgabe der Anregungsenergie aus mindestens einem isolierten elektrischen Leiter (81 bis 83; 81', 82') bestehen, der entlang des Halters (5, 5') der Dichtung (4, 4'), insbesondere in einem Schutzrand (50) der Tür (1) und/oder entlang der gegenüberliegenden Rumpfseitenfläche (21, 22, 23; 21'), insbesondere entlang der dem Schutzrand (50) gegenüberliegenden Rumpfseitenfläche (21') verläuft, und die Anregungsenergiequelle eine elektrische Spannungsquelle ist, die einen Strom einer Stärke überträgt, die so angepasst ist, um den Leiter auf eine Temperatur zu erwärmen, die einen bestimmten Höchstwert nicht überschreitet.

10. Anordnung gemäß dem vorhergehenden Anspruch, wobei der Halter (5, 5') der Dichtung (4, 4') aus einem Material hergestellt ist, das ausgewählt ist aus Epoxid-Kohlenstofffasermaterial, Verbundfasermaterial, Material auf der Basis von Silikon und Elastomeren, und der Leiter (81 bis 83; 81', 82') durch ein Filament (61 bis 63) aus einer Metalllegierung gebildet ist, das im Kern einer Hülle aus elektrisch isolierendem Material (71 bis 73) untergebracht ist, wobei der Leiter (81 bis 83; 81', 82') zumindest teilweise auf oder im Halter (5, 5') befestigt ist.

11. Anordnung gemäß einem der Ansprüche 7 oder 8, wobei die Mittel zur Abgabe der Anregungsenergie durch Ultraschallemitter gebildet sind und die Energiequelle eine Ultraschallquelle ist.

12. Anordnung gemäß einem der Ansprüche 7 oder 8, wobei die Mittel zur Abgabe der Anregungsenergie aus Schleifen zur Abgabe einer von einer Quelle elektrischer Impulse erzeugten elektroinduktiven Abstoßungsenergie bestehen.

13. Anordnung gemäß einem der Ansprüche 7 oder 8, wobei die Mittel zur Abgabe der Anregungsenergie aus einem mit Druck beaufschlagten Heißluftstrahl bestehen, der von einem Kompressor vorgewärmter Luft als Energiequelle bereitgestellt wird.

14. Anordnung gemäß einem der Ansprüche 8 bis 10 oder einem der Ansprüche 11 bis 12, sofern die Ansprüche 11 bis 12 von Anspruch 8 abhängen, wobei auch auf die Türhaut (1e') und die Rumpfhaut (2e') in der Nähe des Rahmens (20, 20') der Verbindung (J, J') zwischen der Tür (1, 1') und dem Rumpf (2, 2') Antihaftschichten aufgebracht sind, insbesondere Nanobeschichtungen (7a, 7b), die chemisch mit den Häuten (1e', 2e') verbunden sind, und/oder ein elektrisch leitfähiger Lackstreifen, der mit einer Spannungsquelle (60) verbunden ist.

15. Anordnung gemäß einem der Ansprüche 7 bis 13, wobei es sich bei der Ausstattung um eine mit dem Antivereisungs-/Enteisungssystem ausgestattete Flugzeugtür handelt.

16. Flugzeug, das mit einer Anordnung gemäß einem der Ansprüche 7 bis 13 ausgestattet ist, wobei das Antivereisungs-/Enteisungssystem in der Nähe mindestens der Verbindungsstelle der Flugzeugausstattung angeordnet ist, wobei die Ausstattung unter Türen, Türaußengriffen und Belüftungsplatten ausgewählt ist.

## Claims

1. An anti-icing/de-icing method for a piece of aircraft equipment (1, 1') having an opening (J, J') which is directed toward the outer side of the aircraft and which is surrounded by the fuselage (2, 2') via a sealing joint (4, 4') in the closed position, **characterized in that** it involves dissipating an excitation energy along at least one extent (5, 21') which at least partially follows the sealing joint (4, 4') of the opening (J, J') of the piece of equipment (1, 1') out of this sealing joint (4, 4'), the dissipation being started when the engines of the aircraft are in operation and the external temperature is less than or substantially equal to a reference temperature.

2. The anti-icing/de-icing method as claimed in claim 1, wherein the excitation energy is dissipated at a door edge (10), in particular along at least one lateral face (11, 12, 13) of the door (1, 1'), and/or along a lateral face (21, 22, 23, 25) of the fuselage (2, 2') parallel with the edge (10) of a door (1, 1').

3. The anti-icing/de-icing method as claimed in the preceding claim, wherein the excitation energy is selected from thermal energy, vibration energy, electro-expulsive energy and pneumatic energy.

4. The anti-icing/de-icing method as claimed in claim 3, wherein the thermal energy is implemented by an electric current.

5. The anti-icing/de-icing method as claimed in claim 3, wherein the pneumatic energy is implemented by a current of pressurized hot air.

6. The anti-icing/de-icing method as claimed in one of the preceding claims, wherein an anti-icing solution is also vaporized along the door edge (10).

7. Assembly comprising an anti-icing/de-icing system and an equipment (1, 1') for an aircraft equipped in particular with engines and a central control unit, this system is intended to carry out the method as claimed in one of the preceding claims, and comprising a control processor able to receives pieces of information involving temperature and pieces of information involving the operation of the engines from the central control unit, such a system is **characterized in that** it also includes a sealing joint (4, 4') of said equipment (1, 1') an excitation energy source and dissipation means (81 to 83; 81', 82') for such energy which extend parallel with at least a portion of the sealing joint (4, 4') of the piece of equipment (1, 1') out of this sealing joint (4, 4').

8. Assembly comprising an anti-icing/de-icing system for aircraft equipment as claimed in the preceding claim, and an aircraft fuselage (2, 2'), wherein the equipment is a door of said aircraft (1, 1'), the dissipation means extend parallel to at least one lateral face (11, 12, 13) of the aircraft door (1, 1'), along a support (5, 5') of a sealing joint (4, 4') which is fixedly joined to the door (1, 1') facing a lateral face (21, 22, 23; 21') of the fuselage (2, 2') of a frame (20, 20') of the door (1, 1') and/or along a lateral face (21, 22, 23; 21') of the fuselage (2, 2'), the sealing joint (4, 4') of the door (1, 1') being compressed against an abutment (6, 90) which is from a lateral face (25, 25') of the fuselage (2, 2') when the door (1, 1') is closed.

9. Assembly as claimed of claim 8, wherein the dissipation means of the excitation energy are constituted by at least one insulated electrical conductor (81 to 83; 81', 82') which extends along the support (5, 5') of the sealing joint (4, 4'), in particular in a protection rim (50) of the door (1), and/or along the facing lateral fuselage face (21, 22, 23; 21'), facing in particular along the lateral fuselage face (21') facing the protection rim (50), and the source of excitation energy is a source of electric voltage which transmits a current having an intensity which is suitable for heat the conductor to a temperature which does not exceed a predetermined upper value.

10. Assembly as claimed in the preceding claim, wherein the support (5, 5') of the sealing joint (4, 4') is produced from a material which is selected from a material having epoxy carbon fibers, composite fibers, fibers based on silicone and elastomer materials, and the conductor (81 to 83; 81', 82') is formed by a filament (61 to 63) of metal alloy which is received within a sheath of electrically insulating material (71 to 73), the conductor (81 to 83; 81', 82') being fixedly joined at least partially to or in the support (5, 5').

11. Assembly as claimed in either of claims 7 and 8, wherein the dissipation means of the excitation energy are constituted by ultrasound transmitters and the energy source is an ultrasound source.

12. Assembly as claimed in either of claims 7 and 8, wherein the dissipation means of the excitation energy are constituted by dissipation loops of an electro-repulsive energy which is produced by a source of electrical pulses.

13. Assembly as claimed in either of claims 7 and 8, wherein the dissipation means of the excitation energy are constituted by a jet of pressurized hot air which is supplied by a preheated air compressor as an energy source.

14. Assembly as claimed in one of claims 8 to 10, or claims 11 to 12 when claims 11 to 12 depend on claim 8, wherein anti-adhesive layers are also deposited on the skin of the door (1e') and the skin (2e') of the fuselage in the region of the frame (20, 20') of the junction (J, J') between the door (1, 1') and the fuselage (2, 2'), in particular nano-coatings (7a, 7b) which are chemically connected to the skins (1e', 2e') and/or a strip of electricity conducting paint which is connected to a voltage source (60).

15. Assembly as claimed in one of claims 7 to 13, which the equipment is an aircraft door equipped with the anti-icing/de-icing system.

16. An aircraft which is provided with an assembly according to any of claims 7 to 13, the anti-icing/de-icing system being arranged in the region of at least the joint of a piece of equipment of the aircraft selected from the doors, the outer door handles and the vent panels.
